(19) Europäisches Patentamt
European Patent Office
Office européen des brevets

(11) Veröffentlichungsnummer: **0 034 695**
**B1**

# (12) EUROPÄISCHE PATENTSCHRIFT

(45) Veröffentlichungstag der Patentschrift: **16.05.84**

(51) Int. Cl.³: **C 01 B 33/28**

(21) Anmeldenummer: **81100174.2**

(22) Anmeldetag: **13.01.81**

## (54) Verfahren zur Herstellung von Zeolith A.

(30) Priorität: **26.02.80 DE 3007123**

(43) Veröffentlichungstag der Anmeldung: **02.09.81 Patentblatt 81/35**

(45) Bekanntmachung des Hinweises auf die Patenterteilung: **16.05.84 Patentblatt 84/20**

(84) Benannte Vertragsstaaten: **AT BE CH DE FR GB IT LI NL SE**

(56) Entgegenhaltungen:
**DE - A - 2 651 437**
**DE - A - 2 651 485**
**DE - A - 2 704 310**
**DE - A - 2 734 296**

**SPRECHSAAL, Band 112, Nr. 12, 1979 F. WOLF et al "Zur Synthese und Anwendung zeolithischer Molekularsiebe, Teil I: Synthese" Seiten 917 bis 922**
**MANUFACTURING CHEMIST & AEROSOL NEWS, Band 49, Nr. 10, 1978 M. ETTLINGER et al. "Synthetic Zeolites as New Builders for Detergents" Seiten 51 bis 66**

(73) Patentinhaber: **Degussa Aktiengesellschaft, Weissfrauenstrasse 9, D-6000 Frankfurt am Main 1 (DE)**
Patentinhaber: **Henkel Kommanditgesellschaft auf Aktien, Postfach 1100 Henkelstrasse 67, D-4000 Düsseldorf-Holthausen (DE)**

(72) Erfinder: **Strack, Hans, Dr., Siedlungsstrasse 26, D-8755 Alzenau (DE)**

**EP 0 034 695 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Zeolith A

Die Erfindung betrifft ein Verfahren zur Herstellung von kristallinem Zeolithpulver des Typs A.

Zeolith A ist ein kristallines Alkalialuminiumsilikat und entspricht in seiner Zusammensetzung der Formel

$$1{,}0 \pm 0{,}2\ M_{2/n}O : Al_2O_3 : 1{,}85 \pm 0{,}5\ SiO_2 \cdot y\ H_2O,$$

wobei M ein Metallkation, n seine Wertigkeit und y ein Wert bis zu 6 bedeuten.

Zeolith A gewinnt in zunehmendem Maße an Bedeutung als Phosphatsubstitut in Waschmitteln. Für diesen Anwendungszweck ist es wünschenswert, daß das kristalline Zeolithpulver des Typs A eine möglichst einheitliche Teilchengröße, d. h., eine möglichst enge Teilchengrößenverteilungskurve aufweist.

Die DE-A-27 34 296 beschreibt ein Verfahren zur Herstellung von feinteiligen, zum Kationenaustausch befähigten wasserunlöslichen Silikaten, mit einem beispielsweise zwischen 3 und 5 Mikrometer liegenden Maximum der Teilchengrößenverteilung. Das Verfahren wird derart durchgeführt, daß man Wasserglaslösung vorlegt und Natriumaluminatlösung hinzugibt. Anschließend wird die Reaktionsmischung erhitzt.

Die DE-A 27 04 310 beschreibt ein Verfahren zur Herstellung von feinteiligen, zum Kationenaustausch befähigten Silikaten, bei dem man wäßrige Alkalialuminatlauge mit wäßriger Alkalisilikatlösung in Gegenwart von überschüssigem Alkali vermischt und die Reaktionsmischung gegebenenfalls recyklierend durch eine Zerkleinerungsvorrichtung führt.

Die DE-A 26 51 437 beschreibt ein Verfahren zur Herstellung eines kristallinen Zeolithpulvers des Typs A mit 50 Gew.-% unter höchstens 5,9 Mikrometer liegenden Teilchen. Dabei werden in eine Vorlage aus Wasser gleichzeitig Natriumaluminatlauge und Alkalisilikatlösung unter Rühren hinzugegeben. Die Mischung wird mit Wasser verdünnt, wonach anschließend weitere Natriumaluminatlauge der gleichen Zusammensetzung und Wasser hinzugegeben wird. Die so erhaltene Synthesemischung wird bei einer Temperatur zwischen 20 und 175° C kristallisiert.

Gegenstand der vorliegenden Erfindung ist ein Verfahren zur Herstellung von kristallinem Zeolithpulver des Typs 1 mit einem Gritgehalt (Teilchen größer 45 µm nach Mocker) von <0,115 Gew.-%, durch Umsetzung von Natriumaluminatlauge mit Wasserpluslösung, welches dadurch gekennzeichnet ist, daß man zur Herstellung eines Zeolithpulvers mit einem mittleren Teilchendurchmesser von 7 bis 8,5 µm 1,5 bis 2,5 Volumenteile Natriumaluminatlauge mit einer Konzentration von 50 bis 200, vorzugsweise 90 bis 150 g/l $Na_2O$ und 30 bis 150, vorzugsweise 60 bis 100 g/l $Al_2O_3$ gleichzeitig mit 0,6 bis 2,5 Volumenteile einer Wasserglaslösung mit einer Konzentration von 90 bis 120, vorzugsweise 100 bis 120 g/l $Na_2O$ und 330 bis 380, vorzugsweise 340 bis 370 g/l $SiO_2$ welche gegebenenfalls mit der 2,3 bis 2,4fachen Volumenmenge an Wasser verdünnt ist, unter Rühren bei einer Temperatur von 30 bis 70° C in eine Vorlage aus 8 bis 12 Volumenteilen Wasser während eines Zeitraumes von 5 bis 15 Minuten hineingibt, die Reaktionsmischung 15 bis 45 Minuten bei einer Temperatur von 30 bis 70° C rührt, anschließend weitere 15 bis 20 Volumenteile einer Natriumaluminatlauge derselben Konzentration während eines Zeitraumes von 100 bis 140 Minuten bei einer Temperatur von 30 bis 70° C unter Rühren hinzugibt, gegebenenfalls weitere 25 bis 35 Minuten rührt, anschließend weitere 1,0 bis 3,5 Volumenteile einer Wasserglaslösung derselben Konzentration unter Rühren bei einer Temperatur von 30 bis 70° C hinzugibt, die Reaktionsmischung gegebenenfalls bei einer Temperatur von 70 bis 100° C über einen Zeitraum von 20 bis 180 Minuten nachrührt, die Reaktionsmischung abkühlt, das kristalline Reaktionsprodukt abfiltriert, mit Wasser bis auf einen pH-Wert von unter 10,5 wäscht und anschließend trocknet, wobei das Filtrat und das Waschwasser gegebenenfalls zur Form der Natriumaluminatlauge aufgearbeitet und in den Reaktionsprozeß zurückgeführt werden.

Das mittels dem erfindungsgemäßen Verfahren hergestellt Zeolithpulver des Typs A weist einen mittleren Teilchendurchmesser von 7 bis 8,5 µm auf. Es kann vorteilhaft als Phosphatsubsitut in Waschmitteln eingesetzt werden.

Das erfindungsgemäße Verfahren wird anhand der folgenden Beispiele näher erläutert und beschrieben.

### Beispiel 1

In einem Reaktionsgefäß werden 10 l Wasser vorgelegt. Gleichzeitig werden dann unter Rühren und bei einer Temperatur von 60° C während eines Zeitraumes von 10 Minuten 2 l Natriumaluminatlauge mit einer Konzentration von 142 g/l $Na_2O$ und 85 g/l $Al_2O_3$ und 2,5 l Wasserglas mit einer Konzentration von 104 g/l $Na_2O$ und 356 g/l $SiO_2$ in diese Vorlage gegeben. Anschließend wird die Reaktionsmischung 30 Minuten gerührt. Anschließend werden weitere 18 l Natriumaluminatlauge derselben Konzentration während 2 Stunden bei einer Temperatur von 60° C unter Rühren hinzugegeben. Weitere 1,1 l Wasserglaslösung derselben Konzentration werden danach unter Rühren bei einer Temperatur von 60° C während eines Zeitraumes von 10 Minuten hinzugegeben. Anschließend wird bei einer Temperatur

von 82° C 120 Minuten nachgerührt, filtriert, ausgewaschen und getrocknet.

Das Reaktionsprodukt ist reiner Zeolith A mit der folgenden Teilchenverteilung (gemessen mit dem Coulter Counter):

50 Gew.-% > 7 µm
12 Gew.-% > 10 µm
3 Gew.-% > 15 µm

Der Gritgehalt (Teilchen > 45 µm) nach Mocker beträgt 0,092 Gew.-% und das Calciumbindevermögen 163 mg CaO/g Zeolith. Die Mutterlauge wird für die Bereitung frischer Natriumaluminatlösung verwendet.

Beispiel 2

In einem Reaktionsgefäß werden 10 l Wasser vorgelegt. Gleichzeitig werden dann unter Rühren und bei einer Temperatur von 34° C während eines Zeitraumes von 10 Minuten 2 l Natriumaluminatlauge mit einer Konzentration von 144 g/l $Na_2O$ und 81 g/l $Al_2O_3$ und 0,6 l Wasserglaslösung mit einer Konzentration von 108 g/l $Na_2O$ und 360 g/l $SiO_2$ welche mit 1,4 l Wasser verdünnt wurde, in diese Vorlage gegeben. Anschließend wird die Reaktionsmischung 30 Minuten gerührt. Anschließend werden weitere 18 l Natriumaluminatlauge derselben Konzentration während 10 Minuten bei einer Temperatur von 34° C unter Rühren hinzugegeben. Danach wird die Reaktionsmischung 30 Minuten gerührt. Weitere 3 l Wasserglaslösung derselben Konzentration werden danach unter Rühren bei einer Temperatur von 34° C während eines Zeitraumes von 10 Minuten hinzugegeben.

Anschließend wird bei einer Temperatur von 98° C während 30 Minuten nachgerührt, abfiltriert, gewaschen und getrocknet.

Das Reaktionsprodukt ist reiner Zeolith A mit der folgenden Teilchenverteilung (gemessen mit dem Coulter Counter):

50 Gew.-% > 8,5 µm
19 Gew.-% > 10 µm
4 Gew.-% > 15 µm

Der Gritgehalt (Teilchen > 45 µm) nach Mocker beträgt 0,114 Gew.-% und das Calciumbindevermögen 166 mg CaO/g Zeolith.

**Patentanspruch**

Verfahren zur Herstellung von kristallinem Zeolithpulver des Typs A mit einem Gritgehalt (Teilchen größer 45 Mikrometer nach Mocker) von <0,115 Gew.-%, durch Umsetzung von Natriumaluminatlauge mit Wasserpluslösung, dadurch gekennzeichnet, daß man zur Herstellung eines Zeolithpulvers mit einem mittleren Teilchendurchmesser von 7 bis 8,5 µm 1,5 bis 2,5 Volumenteile Natriumaluminatlauge mit einer Konzentration von 50 bis 200 g/l $Na_2O$ und 30 bis 150 g/l $Al_2O_3$ gleichzeitig mit 0,6 bis 2,5 Volumenteile einer Wasserglaslösung mit einer Konzentration von 90 bis 120 g/l $Na_2O$ und 330 bis 380 g/l $SiO_2$, welche gegebenenfalls mit der 2,3- bis 2,4fachen Volumenmenge an Wasser verdünnt ist, unter Rühren bei einer Temperatur von 30 bis 70° C in eine Vorlage aus 8 bis 12 Volumenteilen Wasser während eines Zeitraumes von 5 bis 15 Minuten hineingibt, die Reaktionsmischung 15 bis 45 Minuten bei einer Temperatur von 30 bis 70° C rührt, anschließend weitere 15 bis 20 Volumenteile einer Natriumaluminatlauge derselben Konzentration während eines Zeitraumes von 100 bis 140 Minuten bei einer Temperatur von 30 bis 70° C unter Rühren hinzugibt, gegebenenfalls weitere 25 bis 35 Minuten rührt, anschließend weitere 1,0 bis 3,5 Volumenteile einer Wasserglaslösung derselben Konzentration in einem Zeitraum von 15 bis 30 Minuten unter Rühren bei einer Temperatur von 30 bis 70° C hinzugibt, die Reaktionsmischung gegebenenfalls bei einer Temperatur von 70 bis 100° C über einen Zeitraum von 20 bis 180 Minuten nachrührt, die Reaktionsmischung abkühlt, das kristalline Reaktionsprodukt abfiltriert mit Wasser bis auf einen pH-Wert von unter 10,5 wäscht und anschließend trocknet, wobei das Filtrat und das Waschwasser gegebenenfalls zur Form der Natriumaluminatlauge aufgearbeitet und in den Reaktionsprozeß zurückgeführt werden.

**Claims**

A process for the production of a crystalline powder of the zeolite A type having a grit proportion (particles greater than 45 µm according to Mocker) of <0,115% by weight, by the reaction of sodium aluminate liquor with water glass solution, characterized in that for the production of a zeolite powder having an average particle diameter of from 7 to 8,5 µm, from 1,5 to 2,5 parts by volume of sodium

aluminate liquor having a concentration of from 50 to 200 g/l of $Na_2O$ and from 30 to 150 g/l of $Al_2O_3$ are added simultaneously with from 0,6 to 2,5 parts by volume of a water glass solution having a concentration of from 90 to 120 g/l of $Na_2O$ and from 330 to 380 g/l of $SiO_2$ which is optionally diluted with from 2,3 to 2,4 times the quantity by volume of water, to a starting solution of from 8 to 12 parts by volume of water over a period of from 5 to 15 minutes with stirring at a temperature of from 30 to 70°C, the reaction mixture is stirred for 15 to 45 minutes at a temperature of from 30 to 70°C, a further 15 to 20 parts by volume of a sodium aluminate liquor of the same concentration are then addes with stirring at a temperature of from 30 to 70°C over a period of from 100 to 140 minutes, the mixture is optionally stirred for a further 25 to 35 minutes, a further 1,0 to 3,5 parts by volume of a water glass solution of the same concentration is then added with stirring at a temperature of from 30 to 70°C over a period of from 15 to 30 minutes, the reaction mixture is then optionally stirred at a temperature of from 70 to 100°C over a period of from 20 to 180 minutes and then cooled, the crystalline reaction product is filtered, washed with water to a pH of below 10,5 and then dried, the filtrate and the wash water optionally being worked up into the form of the sodium aluminate liquor and being returned into the reaction process.

**Revendication**

Procédé pour la production de poudre de zéolite cristallisée du type A, avec une partie grossière (particules supérieures à 45 μm selon Mocker) qui est <0,115% en poids, par réaction d'une solution aqueuse d'aluminate de sodium avec une solution de silicate de sodium, procédé caractérisé en ce que, pour la production d'une poudre de zéolite avec un diamètre moyen des particules de 7 à 8, 5 μm, on introduit 1,5 à 2,5 parties en volume d'une solution d'aluminate de sodium ayant une concentration de 50 à 200 g/l de $Na_2O$ et 30 à 150 g/l de $Al_2O_3$, simultanément, avec 0,6 à 2,5 parties en volume d'une solution de silicate de sodium ayant une concentration de 90 à 120 g/l de $Na_2O$ et 330 à 380 g/l de $SiO_2$, qui est éventuellement diluée avec 2,3 à 2,4 fois son volume d'eau, sous agitation, à une température de 30 à 70°C, dans 8 à 12 parties en volume d'eau, en l'espace de 5 à 15 minutes, à une température de 30 à 70°C; agite le mélange réactionnel pendant 15 à 45 minutes à une température de 30 à 70°C, ensuite on y introduit encore 15 à 20 parties en volume d'une solution d'aluminate de sodium à la même concentration, en l'espace de 100 à 140 minutes, à une température de 30 à 70°C sous agitation, on agite éventuellement encore pendant 25 à 35 minutes, puis on introduit encore 1 à 3,5 parties en volume d'une solution de silicate de sodium à la même concentration, en l'espace de 15 à 30 minutes, sous agitation à une température de 30 à 70°C, on agite encore le mélange réactionnel éventuellement à une température de 70 à 100°C, pendant une durée de 20 à 180 minutes, on refroidit le mélange réactionnel, on filtre le produit réactionnel cristallisé, lave avec de l'eau jusqu'à un pH inférieur à 10,5, puis on sèche, le filtrat et les eaux de lavage étant éventuellement retraitées pour former la solution d'aluminate de sodium que l'on recycle dans la réaction.